# EUROPÄISCHE PATENTSCHRIFT

(11) **EP 2 356 276 B1**
(45) Veröffentlichungstag und Bekanntmachung des Hinweises auf die Patenterteilung: **12.09.2012**
(21) Anmeldenummer: 09736228.9
(22) Anmeldetag: 16.10.2009
(51) Int. Cl.: B01F 5/02, D21B 1/32, B03D 1/24, D21F 1/70

(54) **MISCHVORRICHTUNG**
MIXING DEVICE
DISPOSITIF DE MÉLANGE

(30) Priorität: 08.11.2008 DE 102008056506
(43) Veröffentlichungstag der Anmeldung: 17.08.2011
(73) Patentinhaber: Voith Patent GmbH, 89522 Heidenheim (DE)
(72) Erfinder: DREYER, Axel, 88279 Amtzell (DE)
(86) Internationale Anmeldenummer: PCT/EP2009/063529
(87) Internationale Veröffentlichungsnummer: WO 2010/052110

(56) Entgegenhaltungen:
- WO-A1-98/08610
- WO-A1-2006/134235
- DE-A1- 4 309 918

## Beschreibung

Die Erfindung betrifft eine Mischvorrichtung einer Flotationsvorrichtung zur Entfernung von Störstoffen mit Hilfe von Gasblasen aus einer wässrigen Faserstoffsuspension in einem Flotationsbehälter, welche von zumindest einem Strom der Faserstoffsuspension durchströmt wird und wenigstens eine Zuführung eines Stromes von Gas aufweist, wobei der Strom der Faserstoffsuspension in der Mischvorrichtung durch ein oder mehrere Strömungskanäle geführt wird.

Flotationsvorrichtungen der genannten Art sind seit längerer Zeit bekannt und werden insbesondere zur Aufbereitung von Faserstoffsuspensionen eingesetzt, die zumindest teilweise aus Sekundärrohstoffen, vorzugsweise Altpapier gewonnen werden, siehe DE 43 09 918 A1.

Bei dem Flotationsvorgang wird der Umstand genutzt, dass der Faserstoff hydrophil und die Störstoffe oft hydrophob sind. Während der hydrophile Faserstoff in der Suspension verbleibt, gelangen die hydrophoben Störstoffe mit den Flotationsblasen in den Flotationsschaum.

Neben gelösten Druckfarbenpartikeln gibt es insbesondere auch Kleber, Kunststoffpartikel und Harze, die hydrophob sind und so über die Flotation aus der Faserstoffsuspension entfernt werden können.
Dabei hat sich herausgestellt, dass die Größe der Flotationsblasen einen wesentlichen Einfluss auf die Wirkung des Flotationsverfahrens hat.
Große Luftblasen steigen zwar schneller als kleine, können aber weniger oder keine Störstoffe aufnehmen.
Bei Faserstoffsuspensionen mit relativ hoher Stoffdichte steigen kleine Flotationsblasen oft zu langsam, so dass diese mit der gereinigten Faserstoffsuspension abgeführt werden.
In jedem Fall wird eine umfassende Vermischung und Verwirbelung des Faserstoffsuspensions-Gasgemisches angestrebt, was mit einem hohen Energiebedarf verbunden ist.

Die Aufgabe der Erfindung ist es daher, den Energiebedarf ohne wesentliche Beeinträchtigung des Flotationsergebnisses zu vermindern.

Erfindungsgemäß wurde die Aufgabe dadurch gelöst, dass die durchschnittliche Strömungsgeschwindigkeit der Faserstoffsuspension in den Strömungskanälen zwischen 8 und 12 m/s liegt und die Begrenzungswand der Strömungskanäle eine Rauhigkeit Rz zwischen 50 und 2000 Mikrometer hat.
Damit liegt die Strömungsgeschwindigkeit wesentlich unter den gegenwärtigen Werten, was mit einer erheblichen Verminderung der Pumpenergie zur Versorgung der Mischvorrichtung mit Faserstoffsuspension verbunden ist.
Dabei hat es sich herausgestellt, dass diese Verminderung der durchschnittlichen Raumgeschwindigkeit der Strömung vor der Gaszugabe kaum Auswirkungen auf die Blasenbildung hat, wobei die Strömungsgeschwindigkeit bevorzugt zwischen 9 und 11 m/s liegen sollte.
Allerdings sollte der Durchsatzvolumenstrom durch die Mischvorrichtung nicht durch die verminderte Strömungsgeschwindigkeit reduziert werden. Um dies zu gewährleisten, muss die Anzahl der Strömungskanäle erhöht und/oder deren Querschnitt vergrößert werden.
Daher sollte der Durchmesser der Strömungskanäle zwischen 10 und 100 mm, vorzugsweise zwischen 23 und 56 mm liegen.

Um die optimale Durchmischung zu erreichen, sollte des Weiteren die Länge der Strömungskanäle zwischen 0,1 und 2,0, vorzugsweise zwischen 0,4 und 0,7 m liegen.

Zur effizienten Erzeugung von Mikroturbulenzen, welche mit geringen Energieverlusten, jedoch mit einer guten Gaszerkleinerung und Durchmischung verbunden sind, sollte die Begrenzungswand der Strömungskanäle eine Rauhigkeit Rz zwischen 200 und 1000 Mikrometer (nach DIN 4766) aufweisen.

Außerdem kann es von Vorteil sein, wenn sich der Querschnitt der Strömungskanäle in Strömungsrichtung vorzugsweise sprunghaft vergrößert.

Konstruktiv vorteilhaft ist es auch, wenn der, der Mischvorrichtung zugeführte Strom der Faserstoffsuspension durch eine Blende geführt wird, welche den Strom in, den Strömungskanälen zugeordnete Teilströme aufteilt.

Diesen Teilströmen wird über die Zuführung Gas zugeführt, was durch Ansaugen oder über eine Zwangsbelüftung mit Überdruck erfolgen kann. Hierzu kann die Blende Venturidüsen besitzen, durch welche der jeweilige Teilstrom geführt wird, wobei gleichzeitig eine Gas-, insbesondere Luftansaugung erfolgt.

Die Blende kann in einfacher Ausführung jedoch auch von einer Lochplatte gebildet werden, wobei eine Belüftung anschließend nach dem Injektor-Prinzip oder mit Druckluft möglich ist.

Nach der Gaszuführung und Vermischung sollten die Strömungskanäle die Faserstoffsuspension in einen gemeinsamen oder mehrere Mischräume führen, welche die Faserstoffsuspension dann zu einer Prallplatte leiten.
Dabei sollte die Querschnittsfläche des Mischraumes zwischen 2 und 5, vorzugsweise zwischen 2,5 und 3 mal größer als die Summe aller Querschnittsflächen der in den Mischraum führenden Strömungskanäle sein.

Die Prallplatte lenkt die Faserstoffsuspension schließlich zu zumindest einer Ausströmöffnung der Mischvorrichtung.

Nachfolgend soll die Erfindung an einem Ausführungsbeispiel näher erläutert werden. In der beigefügten Zeichnung zeigt:
Figur 1: einen schematischen Querschnitt durch eine Flotationsvorrichtung und
Figur 2: einen schematischen Querschnitt durch eine Mischvorrichtung 5.

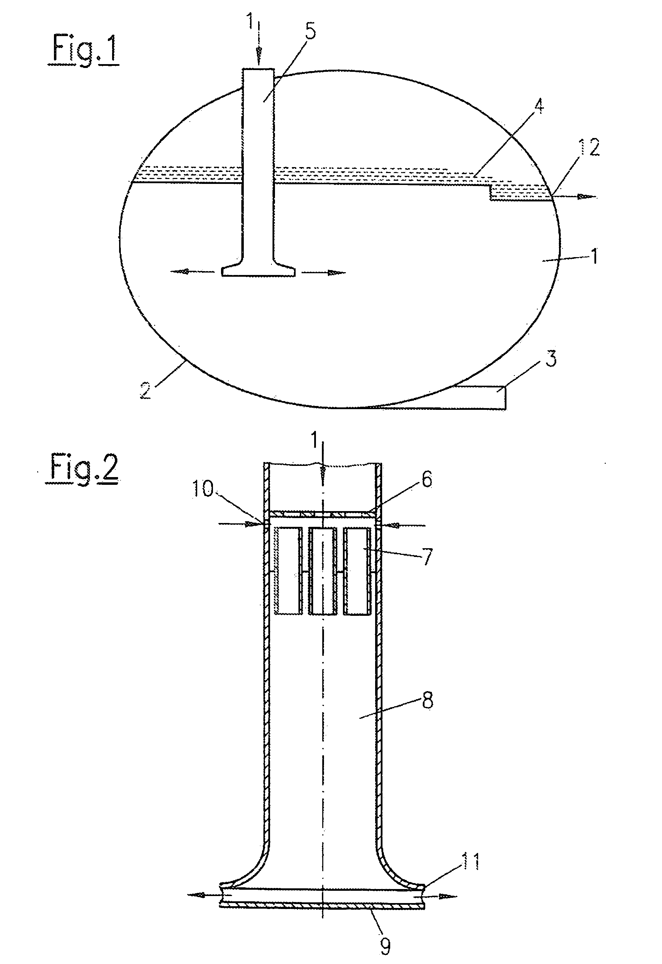

Gemäß Figur 1 wird die zu flotierende, wässrige Faserstoffsuspension 1 über wenigstens eine Mischvorrichtung 5 in einen Flotationsbehälter 2 eingeleitet, wobei sich die Mischvorrichtung 5 im Flotationsbehälter 2 befindet.

Die Mischvorrichtung 5 wird hier im Wesentlichen von einer rotationssymmetrischen Begrenzungswand eines Kanals gebildet, in welchen von oben die Faserstoffsuspension 1 eingeführt wird. In diesen Kanal münden von mehreren Seiten senkrecht zur Strömungsrichtung verlaufende Zuführungen 10 in Form von Düsen zur Begasung der Faserstoffsuspension 1.

Die Mischvorrichtung 5 besitzt, wie in Figur 2 dargestellt, außerdem mehrere Strömungskanäle 7 mit hier beispielhaft kreisförmigem Querschnitt zur Ausbildung eines jeweiligen Teilstromes der Faserstoffsuspension 1.

In diese Teilströme der Faserstoffsuspension 1 wird von mehreren Seiten der Begrenzungswand der Mischvorrichtung 5 über die Zuführungen 10 zumindest je ein Strom von Gas in Form von Druckluft oder aus dem Flotationsbehälter 2 stammender Luft eingeleitet.

Durch diese intensive Begasung werden in der Faserstoffsuspension 1 Gasblasen erzeugt, was dazu führt, dass die flotierbaren Störstoffe zusammen mit den Gasblasen im Flotationsbehälter 2 aufsteigen, sich im Flotationsschaum 4 sammeln und als Rejekt über die Ableitung 12 abgeführt werden.
Die gereinigte Faserstoffsuspension 1 wird im unteren Teil des Flotationsbehälters 2 über einen Auslauf 3 abgeführt.

Der Flotationsbehälter 2 hat hier beispielhaft einen ovalen Querschnitt, was sich als besonders günstig erwiesen hat. Dabei wird die Faserstoffsuspension 1 unter einem Druck, der über dem Umgebungsdruck liegt, in die Mischvorrichtung 5 eingepumpt. Mit Vorteil ist die Mischvorrichtung 5 dabei exmittig im Floationsbehälter 2 angeordnet.

Um die erforderliche Pumpleistung zu vermindern, wird in den Strömungskanälen 7 erfindungsgemäß lediglich eine Strömungsgeschwindigkeit der Faserstoffsuspension zwischen 9 und 11 m/s angestrebt. Allerdings soll sich diese verminderte Strömungsgeschwindigkeit nicht auf den Durchsatzvolumenstrom auswirken.
Aus diesem Grund besitzt die Mischvorrichtung 5 mehr Strömungskanäle 7 als üblich, wobei der Durchmesser der Strömungskanäle 7 zwischen 23 und 56 mm liegt.
Damit die optimale Durchmischung erreicht wird, liegt die Länge der Strömungskanäle 7 zwischen 0,4 und 0,7 m.

Um dabei in den Strömungskanälen 7 zusätzlich Mikroturbulenzen zu schaffen, hat die Begrenzungswand der Strömungskanäle 7 eine Rauhigkeit Rz zwischen 200 und 1000 Mikrometer.
Diese Mikroturbulenzen zerkleinern die aufgenommene Luftblasen und verbessern die Durchmischung.
Zur Aufteilung des, der Mischvorrichtung 5 zugeführten Stromes der Faserstoffsuspension 1 wird dieser vor den Strömungskanälen 7 durch eine als Lochplatte ausgeführte Blende 6 geführt. Die Löcher der Lochplatte sind oft symmetrisch und vor jeweils einem Strömungskanal 7 angeordnet.

Allerdings gibt es zwischen der Blende 6 und den Strömungskanälen 7 einen Spalt, über den die Teilströme über die Zuführungen 10 Luft nach dem Injektorprinzip ansaugen können.

An die Strömungskanäle 7 schließt sich dann ein gemeinsamer Mischraum 8 an, in welchem sich die Strömungsgeschwindigkeit der Faserstoffsuspension 1 erheblich vermindert. Dabei ist die Querschnittsfläche des Mischraumes 8 in Strömungsrichtung 2,5 - 3 mal größer als die Summe aller Querschnittsfläche der Strömungskanäle 7.

Dieser Mischraum 8 wiederum leitet die Faserstoffsuspension 1 zu einer Prallplatte 9, welche die Faserstoffsuspension 1 zu den Ausströmöffnungen 11 der Mischvorrichtung 5 lenkt.
In diesem oft auch als Stoßdiffusor bezeichneten Teil der Mischvorrichtung 5 erfolgt über die Prallplatte 9 eine Umlenkung der begasten Faserstoffsuspension 1 um etwa 90 ° in die Waagerechte und eine Verteilung auf den gesamten Umfang (360°).

Die Ableitung 12 des Flotationsbehälters 2 ist beispielhaft als Schaumrinne ausgebildet.

Im Betrieb kann die Mischvorrichtung 5 wie hier senkrecht oder aber auch waagerecht oder schräg verlaufen.

Im Ergebnis lässt sich durch die Erfindung der Energiebedarf um ca. 8 bis 15 kWh/t reduzieren.

## Patentansprüche

1. Mischvorrichtung (5) einer Flotationsvorrichtung zur Entfernung von Störstoffen mit Hilfe von Gasblasen aus einer wässrigen Faserstoffsuspension (1) in einem Flotationsbehälter (2), welche von zumindest einem Strom der Faserstoffsuspension (1) durchströmt wird und wenigstens eine Zuführung (10) eines Stromes von Gas aufweist, wobei der Strom der Faserstoffsuspension (1) durch ein oder mehrere Strömungskanäle (7) geführt wird, **dadurch gekennzeichnet, dass** die durchschnittliche Strömungsgeschwindigkeit der Faserstoffsuspension (1) in den Strömungskanälen (7) zwischen 8 und 12 m/s liegt und die Begrenzungswand der Strömungskanäle (7) eine Rauhigkeit Rz zwischen 50 und 2000 Mikrometer hat.

2. Mischvorrichtung (5) nach Anspruch 1, **dadurch gekennzeichnet, dass** die durchschnittliche Strömungsgeschwindigkeit der Faserstoffsuspension (1) in den Strömungskanälen (7) zwischen 9 und 11 m/s liegt.

3. Mischvorrichtung (5) nach Anspruch 1 oder 2, **dadurch gekennzeichnet, dass** der Durchmesser der Strömungskanäle (7) zwischen 10 und 100 mm, vorzugsweise zwischen 23 und 56 mm liegt.

4. Mischvorrichtung (5) nach einem der vorhergehenden Ansprüche, **dadurch gekennzeichnet, dass** die Strömungskanäle (7) in einen gemeinsamen oder mehrere Mischräume (8) führen.

5. Mischvorrichtung (5) nach Anspruch 4, **dadurch gekennzeichnet, dass** die Querschnittsfläche des Mischraumes (8) zwischen 2 und 5, vorzugsweise zwischen 2,5 und 3 mal größer als die Summe aller Querschnittsflächen der in den Mischraum (8) führenden Strömungskanäle (7) ist.

6. Mischvorrichtung (5) nach einem der vorhergehenden Ansprüche, **dadurch gekennzeichnet, dass** die Länge der Strömungskanäle (7) zwischen 0,1 und 2,0, vorzugsweise zwischen 0,4 und 0,7 m liegt.

7. Mischvorrichtung (5) nach einem der vorhergehenden Ansprüche, **dadurch gekennzeichnet, dass** die Begrenzungswand der Strömungskanäle (7) eine Rauhigkeit Rz zwischen 200 und 1000 Mikrometer aufweist.

8. Mischvorrichtung (5) nach einem der vorhergehenden Ansprüche, **dadurch gekennzeichnet, dass** der, der Mischvorrichtung (5) zugeführte Strom der Faserstoffsuspension (1) durch eine Blende (6) geführt wird, welche den Strom in, den Strömungskanälen (7) zugeordnete Teilströme aufteilt.

9. Mischvorrichtung (5) nach Anspruch 8, **dadurch gekennzeichnet, dass** den Teilströmen über die Zuführung (10) Gas zugeführt wird.

10. Mischvorrichtung (5) nach einem der Ansprüche 4 bis 9, **dadurch gekennzeichnet, dass** der Mischraum (8) die Faserstoffsuspension (1) zu einer Prallplatte (9) leitet, welche die Faserstoffsuspension (1) zu zumindest einer Ausströmöffnung (11) der Mischvorrichtung (5) lenkt.

## Claims

1. Mixing device (5) of a flotation device for removing impurities with the aid of gas bubbles from an aqueous fibrous suspension (1) in a flotation tank (2), through which mixing device at least one stream of the fibrous suspension (1) flows and which has at least one feed (10) for the stream of gas, the stream of fibrous suspension (1) being guided through one or more flow channels (7),
**characterized in that**
the average flow velocity of the fibrous suspension (1) in the flow channels (7) lies between 8 and 12 m/s, and the boundary wall of the flow channels (7) has a roughness Rz between 50 and 2000 micrometres.

2. Mixing device (5) according to Claim 1,
**characterized in that**
the average flow velocity of the fibrous suspension (1) in the flow channels (7) lies between 9 and 11 m/s.

3. Mixing device (5) according to Claim 1 or 2,
**characterized in that**
the diameter of the flow channels (7) lies between 10 and 100 mm, preferably between 23 and 56 mm.

4. Mixing device (5) according to one of the preceding claims,
**characterized in that**
the flow channels (7) lead into a common mixing chamber (8) or a plurality of mixing chambers (8).

5. Mixing device (5) according to Claim 4,
**characterized in that**
the cross-sectional area of the mixing chamber (8) is between 2 and 5 times, preferably between 2.5 and 3 times, greater than the sum of all the cross-sectional areas of the flow channels (7) leading into the mixing chamber (8).

6. Mixing device (5) according to one of the preceding claims,
**characterized in that**
the length of the flow channels (7) lies between 0.1 and 2.0, preferably between 0.4 and 0.7 m.

7. Mixing device (5) according to one of the preceding claims,
**characterized in that**
the boundary wall of the flow channels (7) has a roughness Rz between 200 and 1000 micrometres.

8. Mixing device (5) according to one of the preceding claims,
**characterized in that**
the stream of fibrous suspension (1) fed to the mixing device (5) is led through a screen (6), which divides the stream into partial streams assigned to the flow channels (7).

9. Mixing device (5) according to Claim 8,
**characterized in that**
gas is supplied to the partial streams via the feed (10).

10. Mixing device (5) according to one of Claims 4 to 9,
**characterized in that**
the mixing chamber (8) leads the fibrous suspension (1) to a baffle plate (9), which deflects the fibrous suspension (1) to at least one discharge opening (11) of the mixing device (5).

## Revendications

1. Dispositif de mélange (5) d'un dispositif de flottation pour éliminer des impuretés à l'aide de bulles de gaz hors d'une suspension fibreuse aqueuse (1) dans un récipient de flottation (2), qui est parcouru par au moins un flux de la suspension fibreuse (1) et qui présente au moins une alimentation (10) en un flux de gaz, le flux de suspension fibreuse (1) étant guidé à travers un ou plusieurs canaux d'écoulement (7), **caractérisé en ce que** la vitesse d'écoulement moyenne de la suspension fibreuse (1) se situe entre 8 et 12 m/s dans les canaux d'écoulement (7) et la paroi de limitation des canaux d'écoulement (7) a une rugosité Rz comprise entre 50 et 2000 microns.

2. Dispositif de mélange (5) selon la revendication 1, **caractérisé en ce que** la vitesse d'écoulement moyenne de la suspension fibreuse (1) dans les canaux d'écoulement (7) se situe entre 9 et 11 m/s.

3. Dispositif de mélange (5) selon la revendication 1 ou 2, **caractérisé en ce que** le diamètre des canaux d'écoulement (7) se situe entre 10 et 100 mm, de préférence entre 23 et 56 mm.

4. Dispositif de mélange (5) selon l'une quelconque des revendications précédentes, **caractérisé en ce que** les canaux d'écoulement (7) conduisent dans un espace de mélange commun ou plusieurs espaces de mélange (8).

5. Dispositif de mélange (5) selon la revendication 4, **caractérisé en ce que** la surface en section transversale de l'espace de mélange (8) est entre 2 et 5 fois, de préférence entre 2,5 et 3 fois plus grande que la somme de toutes les surfaces en section transversale des canaux d'écoulement (7) conduisant dans l'espace de mélange (8).

6. Dispositif de mélange (5) selon l'une quelconque des revendications précédentes, **caractérisé en ce que** la longueur des canaux d'écoulement (7) est comprise entre 0,1 et 2,0, de préférence entre 0,4 et 0,7 m.

7. Dispositif de mélange (5) selon l'une quelconque des revendications précédentes, **caractérisé en ce que** la paroi de limitation des canaux d'écoulement (7) présente une rugosité Rz comprise entre 200 et 1000 microns.

8. Dispositif de mélange (5) selon l'une quelconque des revendications précédentes, **caractérisé en ce que** le flux de suspension fibreuse (1) acheminé au dispositif de mélange (5) est guidé à travers un diaphragme (6) qui divise le flux en des flux partiels associés aux canaux d'écoulement (7).

9. Dispositif de mélange (5) selon la revendication 8, **caractérisé en ce que** du gaz est acheminé aux flux partiels par le biais de l'alimentation (10).

10. Dispositif de mélange (5) selon l'une quelconque des revendications 4 à 9, **caractérisé en ce que** l'espace de mélange (8) conduit la suspension fibreuse (1) jusqu'à une plaque d'incidence (9), qui oriente la suspension fibreuse (1) vers au moins une ouverture de sortie (11) du dispositif de mélange (5).
